(19) Europäisches Patentamt
European Patent Office
Office européen des brevets

(11) **EP 3 817 277 B1**

(12) **EUROPEAN PATENT SPECIFICATION**

(45) Date of publication and mention
of the grant of the patent:
**17.06.2026 Bulletin 2026/25**

(21) Application number: **19800183.6**

(22) Date of filing: **10.05.2019**

(51) International Patent Classification (IPC):
*H04L 9/32* (2006.01)    *G09C 1/00* (2006.01)
*H04L 9/06* (2006.01)    *H04L 9/30* (2006.01)

(52) Cooperative Patent Classification (CPC):
**H04L 9/3073; G09C 1/00; H04L 9/32; H04L 9/3247**

(86) International application number:
**PCT/JP2019/018834**

(87) International publication number:
**WO 2019/216435 (14.11.2019 Gazette 2019/46)**

(54) **DEVICE AND METHOD FOR CERTIFYING RELIABILITY OF PUBLIC KEY, AND PROGRAM THEREFOR**

VORRICHTUNG UND VERFAHREN ZUR ZERTIFIZIERUNG DER ZUVERLÄSSIGKEIT EINES ÖFFENTLICHEN SCHLÜSSELS UND PROGRAMM DAFÜR

DISPOSITIF ET PROCÉDÉ DESTINÉS À CERTIFIER LA FIABILITÉ D'UNE CLÉ PUBLIQUE, ET PROGRAMME ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.05.2018 JP 2018092618**
**19.01.2019 JP 2019007394**

(43) Date of publication of application:
**05.05.2021 Bulletin 2021/18**

(73) Proprietor: **bitFlyer Blockchain, Inc.**
**Minato-ku**
**Tokyo 1076237 (JP)**

(72) Inventor: **KOMIYAMA Takafumi**
**Tokyo 107-6208 (JP)**

(74) Representative: **Marks & Clerk LLP**
**15 Fetter Lane**
**London EC4A 1BW (GB)**

(56) References cited:
**JP-A- 2017 126 943    US-A1- 2011 039 592**

• **HAJER AL HOUSANI ET AL: "Survey on certificateless public key cryptography", INTERNET TECHNOLOGY AND SECURED TRANSACTIONS (ICITST), 2011 INTERNATIONAL CONFERENCE FOR, IEEE, 11 December 2011 (2011-12-11), pages 53 - 58, XP032113078, ISBN: 978-1-4577-0884-8**
• **YOSUKE KATOH; MASAAKI SHIRASE; OSAMU TAKAHASHI; TSUYOSHI TAKAGI: "2E3-3.Implementation of certificate-free public key cryptography in ad hoc networks", THE 2010 SYMPOSIUM ON CRYPTOGRAPHY AND INFORMATION SECURITY SCIS2010, 19 January 2010 (2010-01-19), pages 1 - 6, XP009524531**
• **GO OHTAKE , HIROSHI DOI: "Attribute-based encryption with arbitrary number of authorities", IEICE TECHNICAL REPORT, vol. 110, no. 114, 24 June 2010 (2010-06-24), pages 153 - 158, XP009524530**

## Description

TECHNICAL FIELD

An aspect of the present invention relates to an apparatus, method, and program for proving a reliability of a public key.

BACKGROUND

With the expansion of economic activity on the Internet, there is a growing need to reliably identify the actors of such activity.

Digital certificates are often used to guarantee the reliability of data transmitted over the Internet. A digital certificate certifies the owner of the public key that corresponds to the secret key used to digitally sign the data being transmitted and is issued by a trusted certification authority. The recipient of the data confirms the validity of the digital certificate and verifies the digital signature with a public key.

US2011039592 discloses methods and an apparatus for generating, communicating, and/or verifying ownership of expressions. A first communications device generates an expression from a first public key and an additional input, said first public key corresponding to a private key known to said first communications device. The first device transmits the generated expression on a communications channel used for discovery. A second communications device receives the transmitted expression from the first device. The second device transmits a request signal to the first device associated with the expression; and receives from the first device a signed communication signed using a private key known to said first communications device. The second device uses information from the signed communication to determine if said first communication device owns said expression.

"Survey on certificateless public key cryptography" by Hajer Al Housani et al studies the first certificateless public key cryptography (CL-PKC) scheme which is proposed by Al-Riyami and Paterson.

SUMMARY

Technical Problem

In the future, there will be an increase in the number of situations in which interactions over the Internet need to be reliable, which will lead to an increase in the demand for various forms of electronic certification, depending on the application.

However, current certification authority-centric public key cryptography schemes are not easy to deal with flexibly.

The present invention has been made in view of above problem, and its first objective is to provide an apparatus, method and a program for generating a second key pair comprising a second secret key and a second public key in association with a first key pair comprising a trusted first secret key and a first public key.

Also, a second objective of the present invention is to provide an apparatus, a method and a program for proving the authenticity of a second public key comprising a second key pair generated in association with a first key pair.

Also, a third objective of the present invention is to provide an apparatus, method and a program for executing or verifying an electronic signature using a second key pair generated in association with a first key pair. Solution to the Problem

The present invention relates to a method, a program and an apparatus as claimed in the independent claims. Preferred embodiments are defined in the dependent claims. In a first example there is a method of generating a second key pair comprising a second secret key and a second public key in association with a first key pair comprising a first secret key and a first public key, wherein a first secret key is a, a generator of a cyclic group G is g, a first public key is $a \cdot g$, a second secret key is ax and a second public key is $ax \cdot g$, comprising steps of: determining an integer x, multiplying a first secret key a (where a is an integer) by the x to calculate and store a second secret key ax, multiplying the first public key $a \cdot g$ by the x or multiplying the first secret key a by the x and the g to calculate and store the second public key $ax \cdot g$.

In a second example there is a method of generating a second key pair comprising a second secret key and a second public key in association with a first key pair comprising a first secret key and a first public key, wherein a first secret key is a, a generator of a cyclic group G is g, a first public key is $a \cdot g$, a second secret key is ax, and a second public key is $ax \cdot g$, comprising steps of: determining an integer x, determining a second secret key ax (where ax is an integer), multiplying the first public key $a \cdot g$ (where a is an integer) by the x, multiplying the first secret key a by the x and the g, or multiplying the second secret key ax by the g, to calculate and store the second public key $ax \cdot g$.

In a third example there is the method according to the first or second aspect, wherein the generator of the cyclic group G is a point of an elliptic curve.

In a fourth example there is the method according to the third aspect, wherein the signature scheme by the first key pair is Elliptic Curve DSA.

In a fifth example there is the method according to any one of the first to fourth aspects, further comprising the step of transmitting the first public key a·g from a first apparatus that calculated the second public key ax·g to a second apparatus other than the first apparatus.

In a sixth example there is the method according to any one of the first to fifth aspects, further comprising the step of transmitting the second public key ax·g from a first apparatus that calculated the second public key ax·g to a second apparatus other than the first apparatus.

In a seventh example there is the method according to any one of the first to fifth aspects, further comprising the step of displaying the second public key ax·g on a display screen of a first apparatus that generated the second public key ax·g.

In an eighth example there is the method according to any one of the first to seventh aspects, further comprising the step of transmitting the second secret key ax to a second apparatus other than a first apparatus that generated the second public key ax·g.

In a ninth example there is the method according to any one of the first to seventh aspects, further comprising the step of displaying the second secret key ax on a display screen of a first apparatus that generated the second public key ax·g.

In a tenth example there is the method according to any one of the first to seventh aspects, wherein the second secret key ax is stored in a storage medium other than a first apparatus that generated the second secret key ax·g.

In an eleventh example there is the method according to the first to tenth aspects, wherein the x is a pseudo-random number.

In a twelfth example there is a program for causing a computer to perform a method of generating a second key pair comprising a second secret key and a second public key in association with a first key pair comprising a first secret key and a first public key, wherein a first secret key is a, a generator of a cyclic group G is g, a first public key is a·g, a second secret key is ax, and a second public key is ax·g, the method comprising steps of: determining an integer x, determining a second secret key ax (where ax is an integer), multiplying the first public key a·g (where a is an integer) by the x, multiplying the first secret key a by the x and the g or multiplying the second secret key ax by the g, to calculate and store the second public key ax·g.

In a thirteenth example there is an apparatus for generating a second key pair comprising a second secret key and a second public key in association with a first key pair comprising a first secret key and a first public key, wherein a first secret key is a, a generator of a cyclic group G is g, a first public key is a ·g, a second secret key is ax, and a second public key is ax·g, configured to: determine an integer x, determine a second secret key ax (where ax is an integer), multiply the first public key a·g (where a is an integer) by the x, multiply the first secret key a by the x and the g, or multiply the second secret key ax by the g, to calculate and store the second public key ax·g.

In a fourteenth example there is a method for proving a reliability of a second public key which is part of a second key pair generated in association with a first key pair comprising a first secret key and a first public key, wherein a first secret key is a, a generator of a cyclic group $G_1$ is $g_1$, a first public key is a·$g_1$, a second secret key is ax, a second public key is ax·$g_1$, and $H(n_1, n_2, ... n_N)$ (N is an integer greater than or equal to 1) is a hash function, comprising steps of: receiving a proof request for a proof of a reliability of the second public key ax·$g_1$, calculating a verification formula expressed in equation (1) to verify proof data including x·$H(n_1, n_2, ... n_N)$ and ax·$H(n_1, n_2, ... n_N)$ in response to the proof request, and transmitting a result of the verification as a response to the proof request,

$$e(ax \cdot g_1, H) = e(a \cdot g_1, x \cdot H) = e(g_1, ax \cdot H) \qquad (1)$$

wherein $G_2$ is a cyclic group with $g_2$ as a generator, $G_T$ is a cyclic group with $g_T$ as a generator, and a bilinear map e can be defined from $G_1 \times G_2$ to $G_T$, and wherein a hash function $H(n_1, n_2, ... n_N)$ can be defined as a map from an arbitrary combination of first to Nth data to the cyclic group $G_2$ in which $n_1$ is ax·$g_1$.

In a fiveteenth example there is the method according to the fourteenth aspect, wherein N is greater than or equal to 2 and $n_2$ is data representing an attribute given to the second key pair.

In a sixteenth example there is the method according to the fourteenth or fifteenth aspect, wherein the proof request includes the second public key ax·$g_1$.

In a seventeenth example there is the method according to the fourteenth or fifteenth aspect, wherein the proof request includes the proof data.

In an eighteenth example there is a program for causing a computer to perform a method for proving a reliability of a second public key which is part of a second key pair generated in association with a first key pair comprising a first secret key and a first public key, wherein a first secret key is a, a generator of a cyclic group $G_1$ is $g_1$, a first public key is a·$g_1$, a

second secret key is ax, a second public key is ax·$g_1$, and H($n_1$, $n_2$,...$n_N$) (N is an integer greater than or equal to 1) is a hash function, comprising steps of: receiving a proof request for a proof of a reliability of the second public key ax·$g_1$, calculating a verification formula represented by equation (1) to verify proof data including x·H($n_1$, $n_2$,...$n_N$) and ax·H($n_1$, $n_2$,...$n_N$) in response to the proof request, and transmitting a result of the verification as a response to the proof request,

$$e(ax \cdot g_1, H) = e(a \cdot g_1, x \cdot H) = e(g_1, ax \cdot H) \qquad (1)$$

wherein $G_2$ is a cyclic group with $g_2$ as a generator, $G_T$ is a cyclic group with $g_T$ as a generator, and a bilinear map e can be defined from $G_1 \times G_2$ to $G_T$, and wherein a hash function H($n_1$, $n_2$,...$n_N$) can be defined as a map from an arbitrary combination of first to Nth data to the cyclic group $G_2$ in which $n_1$ is ax·$g_1$.

In a nineteenth example there is an apparatus for proving a reliability of a second public key which is part of a second key pair generated in association with a first key pair comprising a first secret key and a first public key, wherein a first secret key is a, a generator of the cyclic group $G_1$ is $g_1$, a first public key is a·$g_1$, a second secret key is ax, a second public key is ax·$g_1$, and H($n_1$, $n_2$,...$n_N$) (N is an integer greater than or equal to 1) is a hash function, configured to: receive a proof request for a proof of the reliability of the second public key ax·$g_1$, calculate a verification formula expressed in equation (1) to verify proof data including x· H($n_1$, $n_2$,...$n_N$) and ax·H($n_1$, $n_2$,...$n_N$) in response to the proof request, and transmit a result of the verification as a response to the proof request,

$$e(ax \cdot g_1, H) = e(a \cdot g_1, x \cdot H) = e(g_1, ax \cdot H) \qquad (1)$$

wherein $G_2$ is a cyclic group with $g_2$ as a generator, $G_T$ is a cyclic group with $g_T$ as a generator, and a bilinear map e can be defined from $G_1 \times G_2$ to $G_T$, and wherein a hash function H($n_1$, $n_2$,...$n_N$) can be defined as a map from an arbitrary combination of first to Nth data to the cyclic group $G_2$ in which $n_1$ is ax·$g_1$.

In a twentieth example there is a method for proving a reliability of a second identifier generated in association with a first identifier, wherein a first constant is a, a generator of a cyclic group $G_1$ is $g_1$, a first identifier is a·$g_1$, a second constant is ax, a second identifier is ax·$g_1$, and H($n_1$, $n_2$,...$n_N$) (N is an integer greater than or equal to 1) is a hash function, comprising steps of: receiving a proof request for a proof of the reliability of the second identifier ax·$g_1$, calculating a verification formula expressed in equation (1) to verify proof data including x· H($n_1$, $n_2$,...$n_N$) and ax·H($n_1$, $n_2$,...$n_N$) in response to the proof request, and transmitting a result of the verification as a response to the proof request,

$$e(ax \cdot g_1, H) = e(a \cdot g_1, x \cdot H) = e(g_1, ax \cdot H) \qquad (1)$$

wherein $G_2$ is a cyclic group with $g_2$ as a generator, $G_T$ is a cyclic group with $g_T$ as a generator, and a bilinear map e can be defined from $G_1 \times G_2$ to $G_T$, and wherein a hash function H($n_1$, $n_2$,...$n_N$) can be defined as a map from an arbitrary combination of first to Nth data to the cyclic group $G_2$ in which $n_1$ is ax·$g_1$.

According to one example, since a second key pair can be defined so that a second public key which is part of the second key pair generated in association with a first key pair can be mathematically proved as a child key of a first public key which is part of the first key pair, the generation of the second key pair that can be used for digital signature is made possible without the need for a certification authority.

BRIEF DESCRIPTION OF THE DRAWINGS

FIG. 1 shows a flowchart of a method of generating a second key pair from a first key pair according to the first embodiment of the present invention.

FIG. 2 shows a system for proving the reliability of a second public key which is part of a second key pair generated from a first key pair according to the second embodiment of the present invention.

FIG. 3 shows an example of a method flow for proving the reliability of a second public key which is part of a second key pair generated from a first key pair according to the second embodiment of the present invention.

DETAILED DESCRIPTION

Hereinafter, embodiments of the present invention will be described in detail with reference to the drawings.

(First embodiment)

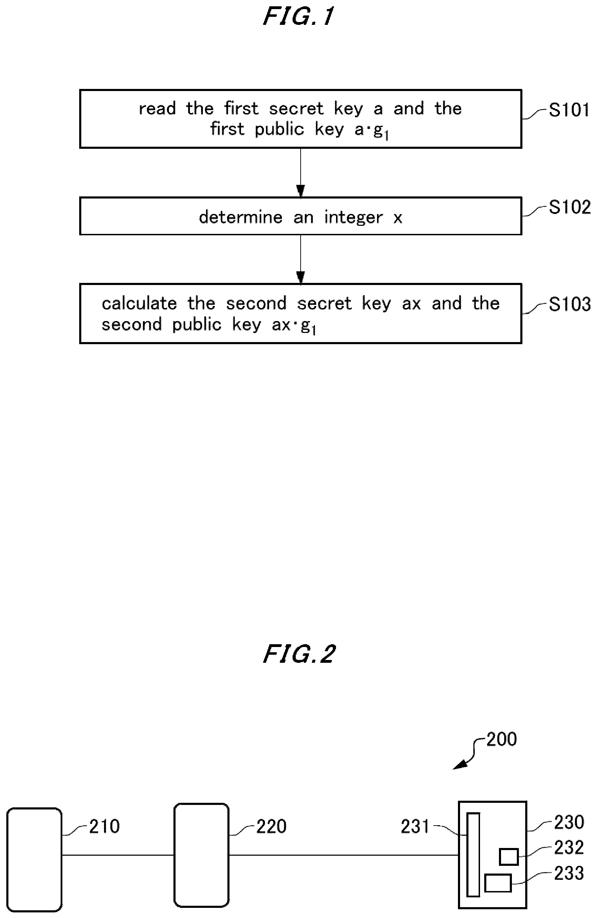

FIG. 1 shows a flowchart of a method for generating a second key pair from a first key pair according to the first embodiment of the present invention. The generation of a key pair can be performed on any apparatus capable of performing the processes described below, which can be a portable device such as a smartphone, tablet, etc., by way of example. It is not necessarily needed to be connected to a computer network, such as the Internet, during the generation of the second key pair.

On the apparatus, $G_1$ is defined as a cyclic group with $g_1$ as its generator, $G_2$ is defined as a cyclic group with $g_2$ as its generator, and $G_T$ is defined as a cyclic group with $g_T$ as its generator. A map e is defined as a map from $G_1 \times G_2$ to $G_T$, and a hash function H'(m) is defined as a map from any data m to $G_2$. It is possible to compute the map e and the hash function H'(m) on the apparatus. In addition, the map e shall satisfy the bilinearity shown by the following equation, with a and b as arbitrary integers.

$$e(a \cdot g_1, b \cdot g_2) = g_T^{ab}$$

The orders of the generators $g_1$ and $g_2$ should be prime, and the respective numbers of elements of the cyclic groups G1 and G2 generated by respective generators are preferably greater than or equal to 32 bytes, or 256 bits, as an example. Here, the operations in the cyclic groups G1 and G2 are described additively; for example, the operation of repeatedly adding the generator $g_1$ a times is expressed as $a \cdot g_1$ and referred to as "multiplying a to a generator $g_1$". Note that multiplication between the elements of a set of integers, such as ax, is also used herein as a notation, but it is different from multiplication in a cyclic additive group. Although the cyclic groups G1 and G2 are described herein as additive groups, we remind you that they are equivalent to the present invention and are within the technical scope of the present invention even if they are described as cyclic multiplicative groups.

First, read the pre-generated first secret key a and the first public key $a \cdot g_1$ as the first key pair (S101). Here, a is an integer, preferably determined as a random number, for example. Next, determine an integer x (S102). Here, the integer x can be determined, for example, as a random number or a pseudo-random number, preferably other than 1. As an example, we can define i as an integer and a pseudo-random number x as a hash value with a+i as the argument. In this way, the ith determined x can be calculated as appropriate without having to store the ith determined x. Then, as the second key pair, the second secret key ax and the second public key $ax \cdot g_1$ are calculated and stored by multiplying x (S103).

The owner of the public key $a \cdot g_1$ can be assumed in this embodiment to be certified by a digital certificate issued by a conventional trusted certification authority. Alternatively, it can be assumed to be provided reliability by some form other than certification by a certification authority.

If the first key pair is used to perform a digital signature on arbitrary data m, if $a \cdot H'(m)$ is the signature s, then using the disclosed generator $g_1$ and the first public key $a \cdot g_1$, the recipient of the data m and the signature s can compute the following equation, and the signature s can be verified by matching the left and right sides, which shows that the first key pair defined as described above can be used as a cryptographic scheme.

$$e(a \cdot g_1, H'(m)) = e(g_1, a \cdot H'(m)) = e(g_1, s)$$

Similarly, the second key pair can be shown to be a valid cryptographic scheme. But unless it is provable that the second public key, $ax \cdot g_1$, was generated by the owner of the first public key, $a \cdot g_1$, to which reliability has been provided, the signature by the second key pair cannot be any more reliable than that it was signed by the second secret key, ax. This point will be discussed in the second embodiment.

As a cryptographic scheme for electronic proof of arbitrary data m, a cryptographic scheme using an elliptic curve such as Elliptic Curve DSA can be employed if the elements of the cyclic group $G_1$ generated by the generator $g_1$ are points on an elliptic curve and a known predetermined relationship between the elements holds.

Here, in the explanation above, it is assumed that the first secret key a and the first public key $a \cdot g_1$ are determined and stored in advance, but the first secret key a may be determined in advance and the first public key $a \cdot g_1$ can be calculated if necessary. In the description above, an integer x is determined after the first secret key a and the first public key $a \cdot g_1$ are determined, but the first secret key a and, if necessary, the first public key $a \cdot g_1$ may be determined after the integer x is determined. Also, instead of determining the first secret key a directly, the integer x and the second secret key ax may be determined and stored as random or pseudo-random numbers, respectively, and the first secret key a may be calculated from these values. In other words, the generation of the second key pair includes various aspects of generation in association with the first key pair. The value of x may also be calculated from the value of a and the value of ax, if necessary.

The first secret key a is data never disclosed externally in principle, although it may be stored in an external storage medium or storage device for backup. Also, x is not data to be disclosed externally in principle.

One feature of the generation of the second key pair according to this embodiment is that the second secret key ax is an element of the set of integers as well as the first secret key a, and the second public key ax·g is an element of the cyclic group G1 generated by the generator g as well as the first public key a·g, so that the second key pair is of the same format as the first key pair, allowing repeatedly generating a child key pair, such as the third key pair from the second key pair and the fourth key pair from the third key pair.

It is to be noted that if the term "only" is not written, such as in "based only on x", "in response to x only", or "in the case of x only", in the present specification, it is assumed that additional information may also be taken into account. Also, as an example, it is to be noted that a description "b is performed in the case of a" does not necessarily mean "b is always performed in the case of a" except where expressly stated.

In addition, as a caveat, even if there are aspects of a method, program, terminal, apparatus, server or system (hereinafter referred to as "method, etc.") that perform operations different from those described herein, each aspect of the invention is intended to perform the same operation as one of the operations described herein, and the existence of an operation different from those described herein does not mean that the method, etc. is outside the scope of each aspect of the invention.

(Second embodiment)

FIG. 2 shows a system for proving the reliability of a second public key which is part of a second key pair generated from a first key pair, according to the second embodiment of the present invention.

The system 200 comprises a transmitting apparatus 210 that generates a second key pair from the first key pair to transmit a second public key that is part of the second key pair, a receiving apparatus 220 that receives the second public key, and a certifying apparatus 230 that proves the reliability of the second public key. The transmitting apparatus 210, the receiving apparatus 220 and the proving apparatus 230 can communicate with each other via a computer network.

The proving apparatus 230 is a computer comprising a communication unit 231, such as a communication interface, a processing unit 232, such as a processor, CPU, etc., and a storage unit 233 including a storage device or medium, such as a memory, hard disk, etc., and can realize each of the processes described below by executing a prescribed program. The proving apparatus 230 may include one or more apparatuses or servers. The program may include one or more programs, and may be stored on a computer-readable storage medium to form a non-transitory program product. With respect to the transmitting and receiving apparatuses 210 and 220, although not shown in the figure, they may have similar hardware configurations.

In the transmitting apparatus 210, the second public key $ax·g_1$, which is part of the second key pair generated by the method described in the first embodiment, cannot play a role in identifying its owner if its reliability cannot be verified at the receiving apparatus 220 that receives it. Therefore, in this embodiment, the receiving apparatus 220 makes a request for a proof of the reliability of the second public key $ax·g_1$ to the proving apparatus 230.

Specifically, the proving apparatus 230 receives $x·H(n)$ and $ax·H(n)$ as proof data in addition to the second public key $ax·g_1$, either indirectly via the receiving apparatus 220 or directly from the transmitting apparatus 210. The proving apparatus 230 can prove that the second public key $ax·g_1$ was generated by the owner of the first public key $a·g_1$, based on the fact that the calculation result of the following verification formula shows that the three sides match, using the generator $g_1$ and the first public key $a·g_1$ known and accessible in some way. Here, n is $ax·g_1$ and $H(n)$ is a map to $G_2$, which can be the same or different from $H'(m)$ used for the digital signature described above.

$$e(ax \cdot g_1, H(n)) = e(a \cdot g_1, x \cdot H(n)) = e(g_1, ax \cdot H(n))$$

Since $x·H(n)$ cannot be calculated without knowing the integer x, and in addition, $ax·H(n)$ cannot be calculated without knowing the integer a, the fact that three sides match proves that the provider of $x·H(n)$ and $ax·H(n)$ is the owner of the first public key $a·g_1$ who generated the second public key $ax·g_1$, without knowing a and x or a and ax.

In the description above, we have considered the case where there is a single parent key pair that generates a child key pair, but when there can be multiple parent key pairs, it is necessary to specify with respect to which parent public key of a parent key pair the proof of being a child public key is needed.

The proving apparatus 230 may be the same as the receiving apparatus 220, in which case it can prove the reliability of the second public key $ax·g_1$ by itself. The proving apparatus 230 may also be the same as the transmitting apparatus 210, in which case the generator of the second public key $ax·g_1$ will prove its reliability by itself.

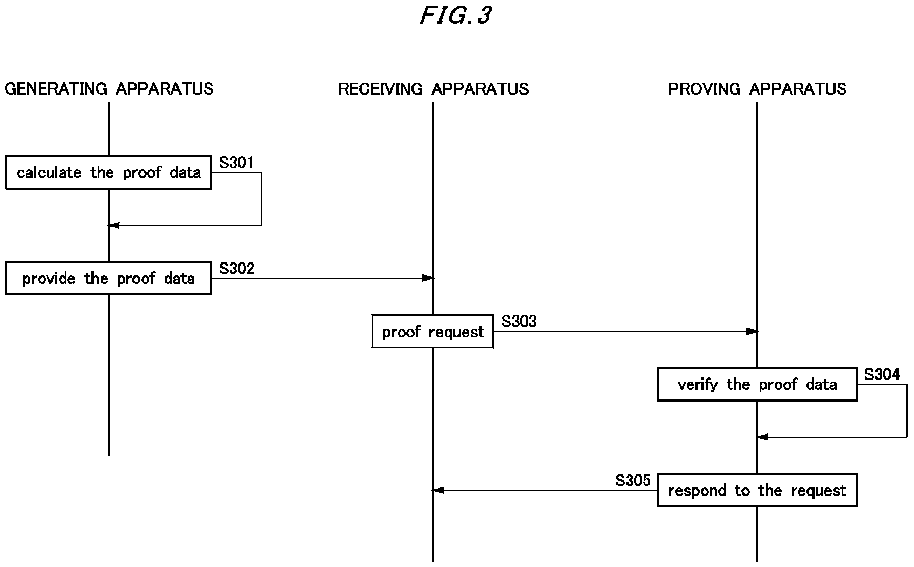

FIG. 3 shows the flow of a method of proving the reliability of a second public key, in the example of a proving apparatus receiving proof data from a generating apparatus. In the description above, we used the term transmitting apparatus, but we will use the more generalized term generating apparatus in FIG. 3.

The generating apparatus 210 calculates and stores the proof data, $x·H(n)$ and $ax·H(n)$, at or around the time it generates the second public key $ax·g_1$ which is part of the second key pair (S301). The generating apparatus 210 provides the calculated proof data to the receiving apparatus 220 (S302). As the manners of providing data to the receiving apparatus 220, various aspects can be raised including transmission to the receiving apparatus 220 via a computer network, connection of a storage medium storing the proof data to the receiving apparatus 220, input of the proof data displayed on the display screen of the generating apparatus 210 to the receiving apparatus 220, and read out, by an image sensor of the receiving apparatus 220, of proof data displayed on a display screen on the generating apparatus 210 or corresponding data. Various aspects of providing a first public key $a \cdot g_1$ and a second public key $ax \cdot g_1$ from the generating apparatus 210 to the receiving apparatus 220 or other apparatus can be raised similarly.

While the proof data can include H(n), H(n) may be calculated as necessary at the proving apparatus 230 or at the generating apparatus 210 or the receiving apparatus 220 that provides the proof data to the proving apparatus 230.

Upon receiving the proof data, the receiving apparatus 220 transmits a proof request to the proving apparatus 230 asking for a proof that the second public key $ax \cdot g_1$ was generated by the owner of the first public key $a \cdot g_1$, in other words, that the second public key $ax \cdot g_1$ is in a parent-child relationship with the first public key $a \cdot g_1$ (S303).

The proof request includes proof data in this example, but need not be included in the example where the proof data is provided directly from the generating apparatus 210 to the proving apparatus 230. As noted above, in the case where the generating apparatus 210 also serves as the proving apparatus 230, "provide" includes providing it to itself. In addition, a "proof request" includes a request to itself in the case where the receiving apparatus 220 also serves as the proving device 230.

The proof request can include a second public key $ax \cdot g_1$, which is a child key in the parent-child relationship that is to be proved, and a first public key $a \cdot g_1$, which is a parent key in said parent-child relationship. At least one of the parent and child keys can be provided directly or indirectly by the generating apparatus 210 to the proving apparatus 230 and stored in advance in the proving apparatus 230, eliminating the need for explicit specification in the proof request.

The proving apparatus 230 validates the proof data by calculating a verification formula for the proof data in response to a proof request (S304).

The proving apparatus 230 then transmits the verification result as a response to the proof request from the receiving apparatus 220 (S305). When the receiving apparatus 220 also serves as the proving apparatus 230, it stores the verification result in its own storage apparatus or storage medium, but such a process may be included in the concept of "transmission" to itself.

In the above description, the first public key $a \cdot g_1$ and the second public key $ax \cdot g_1$ have been described as "public keys", but they can also be described as "identifiers" of entities that perform some activity on the Internet. Specifically, the present invention can be understood as an apparatus, method, and program for evaluating a reliability of a second identifier generated based on or in association with a first identifier.

(Third embodiment)

The transmitting apparatus 210 can also provide the receiving apparatus 220 a second secret key $ax$ in addition to the second public key $ax \cdot g_1$, while keeping the first secret key $a$ secret. The second secret key $ax$ can be provided in various ways similar to other data. In this case, the receiving apparatus 220 can use the second key pair to perform an electronic signature on the data m. Then, if it receives the proof data including $x \cdot H(n)$ and $ax \cdot H(n)$ from the transmitting apparatus 210, it can, if necessary, pass $ax \cdot g_1$, $x \cdot H(n)$, and $ax \cdot H(n)$ to the recipient of the digital signature along with the data m and the signature s thereto. The recipient will be able to show that the digital signature is by the second key pair generated by the owner of the first public key $a \cdot g_1$.

The receiving apparatus 220 is functioning here as a signing apparatus and transmits to the other apparatus, as part of the signed data in which signature s is added to data m, or as separate data from the signed data, the proof data, and if necessary at least one of the first public key $a \cdot g_1$ and the second public key $ax \cdot g_1$.

The receiving apparatus 220 can generate a third key pair comprising a third secret key $axy$ and a third public key $axy \cdot g_1$ as a further child key pair of the second key pair, if the second secret key $ax$ is provided. Here, the integer y can be defined as a random or pseudo-random number and is preferably other than 1.

(Fourth embodiment)

In the above embodiment, a single parameter n has been considered as the argument for the map H(n) to $G_2$, but it may be H($n_1$, $n_2$,...$n_N$) with N arguments (N is an integer greater than or equal to 1).

For example, when N=2, $n_1$ can be the second public key $ax \cdot g_1$ and $n_2$ can be any string str. As examples of the string str, the expiration date of the second key pair, the ID, such as an email address, of the recipient of the second public key, etc. can be raised. More generally, $n_2$ can be any data representing an attribute given to the second key pair.

The generating apparatus 210 may also receive a request for a generation of the second key pair from the receiving apparatus 220 or other apparatus prior to the generation of the second key pair and then begin the generation, and it may take some data included in the generation request as the value of the argument $n_2$.

REFERENCE SIGNS LIST

200 System
210 Transmitting apparatus
220 Receiving apparatus
230 Proving apparatus
231 Communication unit
232 Processing unit
233 Storage unit

**Claims**

1. A method for proving a reliability of a second public key which is part of a second key pair generated in association with a first key pair comprising a first secret key and a first public key, wherein the first secret key is a, a generator of a cyclic group $G_1$ is $g_1$, the first public key is $a \cdot g_1$, a second secret key of the second key pair is $ax$ where $x$ is an integer, the second public key is $ax \cdot g_1$, and $H(n_1, n_2,...n_N)$, wherein N is an integer greater than or equal to 1, is a hash function, comprising steps of:

   receiving (S303) a proof request for a proof of a reliability of the second public key $ax \cdot g_1$,
   calculating a verification formula expressed in formula (1) to verify proof data (S304) including $x \cdot H(n_1, n_2,...n_N)$ and $ax \cdot H(n_1, n_2,...n_N)$ in response to said proof request, and
   transmitting (S305) a result of the verification as a response to the proof request,

$$e(ax \cdot g_1, H) = e(a \cdot g_1, x \cdot H) = e(g_1, ax \cdot H) \qquad (1)$$

   wherein $G_2$ is a cyclic group with $g_2$ as a generator, $G_T$ is a cyclic group with $g_T$ as a generator, and a bilinear map e can be defined from $G_1 \times G_2$ to $G_T$, and
   wherein the hash function $H(n_1, n_2,...n_N)$ can be defined as a map from an arbitrary combination of first to Nth data to the cyclic group $G_2$ in which $n_1$ is $ax \cdot g_1$.

2. The method according to claim 1, wherein N is greater than or equal to 2 and $n_2$ is data representing an attribute given to the second key pair.

3. The method according to claim 1 or 2, wherein the proof request includes the second public key $ax \cdot g_1$.

4. The method according to claim 1 or 2, wherein the proof request includes the proof data.

5. A program for causing a computer to perform a method for proving a reliability of a second public key which is part of a second key pair generated in association with a first key pair comprising a first secret key and a first public key, wherein the first secret key is a, a generator of a cyclic group $G_1$ is $g_1$, the first public key is $a \cdot g_1$, a second secret key of the second key pair is $ax$ where $x$ is an integer, the second public key is $ax \cdot g_1$, and $H(n_1, n_2,...n_N)$, wherein N is an integer greater than or equal to 1, is a hash function, the method comprising steps of:

   receiving (S303) a proof request for a proof of a reliability of the second public key $ax \cdot g_1$,
   calculating a verification formula expressed in equation (1) to verify proof data (S304) including $x \cdot H(n_1, n_2,...n_N)$ and $ax \cdot H(n_1, n_2,...n_N)$ in response to the proof request, and
   transmitting (S305) a result of the verification as a response to the proof request,

$$e(ax \cdot g_1, H) = e(a \cdot g_1, x \cdot H) = e(g_1, ax \cdot H) \qquad (1)$$

   wherein $G_2$ is a cyclic group with $g_2$ as a generator, $G_T$ is a cyclic group with $g_T$ as a generator, and a bilinear map e can be defined from $G_1 \times G_2$ to $G_T$, and
   wherein the hash function $H(n_1, n_2,...n_N)$ can be defined as a map from an arbitrary combination of first to Nth data to the cyclic group $G_2$ in which $n_1$ is $ax \cdot g_1$.

6. An apparatus for proving a reliability of a second public key which is part of a second key pair generated in association with a first key pair comprising a first secret key and a first public key, wherein the first secret key is a, a generator of a cyclic group $G_1$ is $g_1$, the first public key is $a \cdot g_1$, a second secret key of the second key pair is ax where x is an integer, the second public key is $ax \cdot g_1$, and $H(n_1, n_2, ...n_N)$, wherein N is an integer greater than or equal to 1, is a hash function, configured to:

receive (S303) a proof request for a proof of a reliability of the second public key $ax \cdot g_1$,
calculate a verification formula expressed in equation (1) to verify proof data (S304) including $x \cdot H(n_1, n_2, ...n_N)$ and $ax \cdot H(n_1, n_2, ...n_N)$ in response to the proof request, and
send (S305) a result of the verification as a response to the proof request,

$$e(ax \cdot g_1, H) = e(a \cdot g_1, x \cdot H) = e(g_1, ax \cdot H) \qquad (1)$$

wherein $G_2$ is a cyclic group with $g_2$ as a generator, $G_T$ is a cyclic group with $g_T$ as a generator, and a bilinear map e can be defined from $G_1 \times G_2$ to $G_T$, and
wherein the hash function $H(n_1, n_2, ...n_N)$ can be defined as a map from an arbitrary combination of first to Nth data to the cyclic group $G_2$ in which $n_1$ is $ax \cdot g_1$.

**Patentansprüche**

1. Verfahren zum Nachweisen einer Zuverlässigkeit eines zweiten öffentlichen Schlüssels, der Teil eines zweiten Schlüsselpaares ist, das in Verbindung mit einem ersten Schlüsselpaar erzeugt wurde, das einen ersten geheimen Schlüssel und einen ersten öffentlichen Schlüssel umfasst, wobei der erste geheime Schlüssel a ist, ein Generator einer zyklischen Gruppe $G_1$ $g_1$ ist, der erste öffentliche Schlüssel $a \cdot g_1$ ist, ein zweiter geheimer Schlüssel des zweiten Schlüsselpaares ax ist, wobei x eine ganze Zahl ist, der zweite öffentliche Schlüssel $ax \cdot g_1$ ist und $H(n_1, n_2, ...n_N)$, wobei N eine ganze Zahl größer oder gleich 1 ist, eine Hash-Funktion ist, umfassend die Schritte zum:

Empfangen (S303) einer Nachweisanforderung für einen Nachweis einer Zuverlässigkeit des zweiten öffentlichen Schlüssels $ax \cdot g_1$,
Berechnen einer in Formel (1) ausgedrückten Verifizierungsformel zum Verifizieren von Nachweisdaten (S304), einschließlich $x \cdot H(n_1, n_2, ...n_N)$ und $ax \cdot H(n_1, n_2, ...n_N)$ infolge der Nachweisanforderung, und
Übermitteln (S305) eines Ergebnisses der Verifizierung als eine Antwort auf die Nachweisanforderung,

$$e(ax \cdot g_1, H) = e(a \cdot g_1, x \cdot H) = e(g_1, ax \cdot H) \qquad (1)$$

wobei $G_2$ eine zyklische Gruppe mit $g_2$ als einem Generator ist, $G_T$ eine zyklische Gruppe mit $g_T$ als einem Generator ist und eine bilineare Abbildung e von $G_2 \times G_2$ bis $G_T$ definiert sein kann, und
wobei die Hash-Funktion $H(n_1, n_2, ...n_N)$ als eine Abbildung von einer beliebigen Kombination erster bis N-ter Daten auf die zyklische Gruppe $G_2$ definiert werden kann, in der $n_1$ $ax \cdot g_1$ ist.

2. Verfahren nach Anspruch 1, wobei N größer oder gleich 2 ist und $n_2$ Daten sind, die ein Attribut darstellen, das dem zweiten Schlüsselpaar zugeordnet ist.

3. Verfahren nach Anspruch 1 oder 2, wobei die Nachweisanforderung den zweiten öffentlichen Schlüssel $ax \cdot g_1$ einschließt.

4. Verfahren nach Anspruch 1 oder 2, wobei die Nachweisanforderung die Nachweisdaten einschließt.

5. Programm zum Veranlassen eines Computers, ein Verfahren zum Nachweisen einer Zuverlässigkeit eines zweiten öffentlichen Schlüssels durchzuführen, der Teil eines zweiten Schlüsselpaares ist, das in Verbindung mit einem ersten Schlüsselpaar erzeugt wurde, das einen ersten geheimen Schlüssel und einen ersten öffentlichen Schlüssel umfasst, wobei der erste geheime Schlüssel a ist, ein Generator einer zyklischen Gruppe $G_1$ $g_1$ ist, der erste öffentliche Schlüssel $a \cdot g_1$ ist, ein zweiter geheimer Schlüssel des zweiten Schlüsselpaares ax ist, wobei x eine ganze Zahl ist, der zweite öffentliche Schlüssel $ax \cdot g_1$ ist und $H(n_1, n_2, ...n_N)$, wobei N eine ganze Zahl größer oder gleich 1 ist, eine Hash-Funktion ist, wobei das Verfahren die folgenden Schritte umfasst:

Empfangen (S303) einer Nachweisanforderung für einen Nachweis einer Zuverlässigkeit des zweiten öffentlichen Schlüssels $ax \cdot g_1$,
Berechnen einer in Gleichung (1) ausgedrückten Verifizierungsformel zum Verifizieren von Nachweisdaten (S304), einschließlich $x \cdot H(n_1, n_2, ...n_N)$ und $ax \cdot H(n_1, n_2, ...n_N)$ infolge der Nachweisanforderung, und
Übermitteln (S305) eines Ergebnisses der Verifizierung als eine Antwort auf die Nachweisanforderung,

$$e(ax \cdot g_1, H) = e(a \cdot g_1, x \cdot H) = e(g_1, ax \cdot H) \qquad (1)$$

wobei $G_2$ eine zyklische Gruppe mit $g_2$ als einem Generator ist, $G_T$ eine zyklische Gruppe mit $g_T$ als einem Generator ist und eine bilineare Abbildung e von $G_1 \times G_2$ bis $G_T$ definiert sein kann, und
wobei die Hash-Funktion $H(n_1, n_2, ...n_N)$ als eine Abbildung von einer beliebigen Kombination erster bis N-ter Daten auf die zyklische Gruppe $G_2$ definiert werden kann, in der $n_1$ $ax \cdot g_1$ ist.

6. Einrichtung zum Nachweisen einer Zuverlässigkeit eines zweiten öffentlichen Schlüssels, der Teil eines zweiten Schlüsselpaares ist, das in Verbindung mit einem ersten Schlüsselpaar erzeugt wurde, das einen ersten geheimen Schlüssel und einen ersten öffentlichen Schlüssel umfasst, wobei der erste geheime Schlüssel a ist, ein Generator einer zyklischen Gruppe $G_1$ $g_1$ ist, der erste öffentliche Schlüssel $a \cdot g_1$ ist, ein zweiter geheimer Schlüssel des zweiten Schlüsselpaares $ax$ ist, wobei x eine ganze Zahl ist, der zweite öffentliche Schlüssel $ax \cdot g_1$ ist und $H(n_1, n_2, ...n_N)$, wobei N eine ganze Zahl größer oder gleich 1 ist, eine Hash-Funktion ist, die für Folgendes konfiguriert ist:

Empfangen (S303) einer Nachweisanforderung für einen Nachweis einer Zuverlässigkeit des zweiten öffentlichen Schlüssels $ax \cdot g_1$,
Berechnen einer in Gleichung (1) ausgedrückten Verifizierungsformel zum Verifizieren von Nachweisdaten (S304), einschließlich $x \cdot H(n_1, n_2, ...n_N)$ und $ax \cdot H(n_1, n_2, ...n_N)$ infolge der Nachweisanforderung, und
Senden (S305) eines Ergebnisses der Verifizierung als eine Antwort auf die Nachweisanforderung,

$$e(ax \cdot g_1, H) = e(a \cdot g_1, x \cdot H) = e(g_1, ax \cdot H) \qquad (1)$$

wobei $G_2$ eine zyklische Gruppe mit $g_2$ als einem Generator ist, $G_T$ eine zyklische Gruppe mit $g_T$ als einem Generator ist und eine bilineare Abbildung e von $G_1 \times G_2$ bis $G_T$ definiert sein kann, und
wobei die Hash-Funktion $H(n_1, n_2, ...n_N)$ als eine Abbildung von einer beliebigen Kombination erster bis N-ter Daten auf die zyklische Gruppe $G_2$ definiert werden kann, in der $n_1$ $ax \cdot g_1$ ist.

## Revendications

1. Procédé destiné à prouver une fiabilité d'une seconde clé publique faisant partie d'une seconde paire de clés générée en association avec une première paire de clés comprenant une première clé secrète et une première clé publique, dans lequel la première clé secrète est a, un générateur d'un groupe cyclique $G_1$ est $g_1$, la première clé publique est $a g_1$, une seconde clé secrète de la seconde paire de clés est $ax$ où x est un entier, la seconde clé publique est $ax \cdot g_1$, et $H(n_1, n_2,... n_N)$, dans lequel N est un entier supérieur ou égal à 1, est une fonction de hachage, comprenant les étapes de :

réception (S303) d'une demande de preuve portant sur une preuve d'une fiabilité de la seconde clé publique $ax \cdot g_1$,
calcul d'une formule de vérification exprimée dans la formule (1) pour vérifier des données de preuve (S304) incluant $x \cdot H(n_1, n_2,... n_N)$ et $ax \cdot H(n_1, n_2,... n_N)$ en réponse à ladite demande de preuve, et
transmission (S305) d'un résultat de la vérification à titre de réponse à la demande de preuve,

$$e(ax \cdot g_1, H) = e(a \cdot g_1, x \cdot H) = e(g_1, ax \cdot H) \qquad (1)$$

dans lequel $G_2$ est un groupe cyclique dont $g_2$ est un générateur, $G_T$ est un groupe cyclique dont $g_T$ est un générateur, et une application bilinéaire e peut être définie de $G_1 \times G_2$ dans $G_T$, et
dans lequel la fonction de hachage $H(n_1, n_2,... n_N)$ peut être définie comme une application d'une combinaison arbitraire de premières à N-ièmes données dans le groupe cyclique $G_2$, dans lequel $n_1$ est $ax \cdot g_1$.

**2.** Procédé selon la revendication 1, dans lequel N est supérieur ou égal à 2 et $n_2$ est une donnée représentant un attribut donné à la seconde paire de clés.

**3.** Procédé selon la revendication 1 ou 2, dans lequel la demande de preuve inclut la seconde clé publique $ax \cdot g_1$.

**4.** Procédé selon la revendication 1 ou 2, dans lequel la demande de preuve inclut les données de preuve.

**5.** Programme conçu pour amener un ordinateur à exécuter un procédé destiné à prouver une fiabilité d'une seconde clé publique faisant partie d'une seconde paire de clés générée en association avec une première paire de clés comprenant une première clé secrète et une première clé publique, dans lequel la première clé secrète est a, un générateur d'un groupe cyclique $G_1$ est $g_1$, la première clé publique est a $g_1$, une seconde clé secrète de la seconde paire de clés est ax où x est un entier, la seconde clé publique est $ax \cdot g_1$, et $H(n_1, n_2,... n_N)$, dans lequel N est un entier supérieur ou égal à 1, est une fonction de hachage, le procédé comprenant les étapes de :

réception (S303) d'une demande de preuve portant sur une preuve d'une fiabilité de la seconde clé publique $ax \cdot g_1$,
calcul d'une formule de vérification exprimée dans l'équation (1) pour vérifier des données de preuve (S304) incluant $x \cdot H(n_1, n_2,... n_N)$ et $ax \cdot H(n_1, n_2,... n_N)$ en réponse à la demande de preuve, et
transmission (S305) d'un résultat de la vérification à titre de réponse à la demande de preuve,

$$e(ax \cdot g_1, H) = e(a \cdot g_1, x \cdot H) = e(g_1, ax \cdot H) \qquad (1)$$

dans lequel $G_2$ est un groupe cyclique dont $g_2$ est un générateur, $G_T$ est un groupe cyclique dont $g_T$ est un générateur, et une application bilinéaire e peut être définie de $G_1 \times G_2$ dans $G_T$, et
dans lequel la fonction de hachage $H(n_1, n_2,... n_N)$ peut être définie comme une application d'une combinaison arbitraire de premières à N-ièmes données dans le groupe cyclique $G_2$, dans lequel $n_1$ est $ax \cdot g_1$.

**6.** Appareil destiné à prouver une fiabilité d'une seconde clé publique faisant partie d'une seconde paire de clés générée en association avec une première paire de clés comprenant une première clé secrète et une première clé publique, dans lequel la première clé secrète est a, un générateur d'un groupe cyclique $G_1$ est $g_1$, la première clé publique est a $g_1$, une seconde clé secrète de la seconde paire de clés est ax où x est un entier, la seconde clé publique est $ax \cdot g_1$, et $H(n_1, n_2,... n_N)$, dans lequel N est un entier supérieur ou égal à 1, est une fonction de hachage, configuré pour :

recevoir (S303) une demande de preuve portant sur une preuve d'une fiabilité de la seconde clé publique $ax \cdot g_1$,
calculer une formule de vérification exprimée dans l'équation (1) pour vérifier des données de preuve (S304) incluant $x \cdot H(n_1, n_2,... n_N)$ et $ax \cdot H(n_1, n_2,... n_N)$ en réponse à la demande de preuve, et
envoyer (S305) un résultat de la vérification à titre de réponse à la demande de preuve,

$$e(ax \cdot g_1, H) = e(a \cdot g_1, x \cdot H) = e(g_1, ax \cdot H) \qquad (1)$$

dans lequel $G_2$ est un groupe cyclique dont $g_2$ est un générateur, $G_T$ est un groupe cyclique dont $g_T$ est un générateur, et une application bilinéaire e peut être définie de $G_1 \times G_2$ dans $G_T$, et
dans lequel la fonction de hachage $H(n_1, n_2,... n_N)$ peut être définie comme une application d'une combinaison arbitraire de premières à N-èmes données dans le groupe cyclique $G_2$, dans lequel $n_1$ est $ax \cdot g_1$.

## FIG.1

```
read the first secret key a and the       S101
first public key a·g₁
```

↓

```
determine an integer x                    S102
```

↓

```
calculate the second secret key ax and the   S103
second public key ax·g₁
```

## FIG.2

## FIG.3

| GENERATING APPARATUS | RECEIVING APPARATUS | PROVING APPARATUS |
|---|---|---|

calculate the proof data  S301

provide the proof data  S302

proof request  S303

verify the proof data  S304

S305  respond to the request

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011039592 A